Europäisches Patentamt

European Patent Office

Office européen des brevets

(19)

(11) **EP 1 391 709 A2**

(12) **EUROPÄISCHE PATENTANMELDUNG**

(43) Veröffentlichungstag:
**25.02.2004 Patentblatt 2004/09**

(21) Anmeldenummer: **03007658.2**

(22) Anmeldetag: **03.04.2003**

(51) Int Cl.⁷: **G01L 1/22**, G01L 19/04,
G01L 9/00, G01L 9/04,
G01L 9/06, G01L 1/18

(84) Benannte Vertragsstaaten:
**AT BE BG CH CY CZ DE DK EE ES FI FR GB GR
HU IE IT LI LU MC NL PT RO SE SI SK TR**
Benannte Erstreckungsstaaten:
**AL LT LV MK**

(30) Priorität: **23.08.2002 DE 10238720**

(71) Anmelder: **ROBERT BOSCH GMBH
70442 Stuttgart (DE)**

(72) Erfinder:
• **Reinhardt, Karl-Franz
74189 Weinsberg (DE)**
• **Doering, Christian
70563 Stuttgart (DE)**
• **Stoll, Oliver
72762 Reutlingen (DE)**
• **Knauss, Michael
72124 Pliezhausen (DE)**

(54) **Vorrichtung zur Messung einer Kraft, Vorrichtung zur Messung eines Drucks und Drucksensor**

(57)     Es wird eine Vorrichtung bzw. ein Drucksensor zur Messung einer Kraft bzw. zur Messung eines Druckes in einer vorgegebenen Richtung (35) vorgeschlagen, wobei ein Verpackungselement (100) sowie ein Trägerelement (120) und ein Sensorelement hinsichtlich ihrer temperaturinduzierten Ausdehnungen relativ zum sensierenden Bereich (31) des Sensorelements (20) im Wesentlichen ausgeglichen ist.

Fig.1

Printed by Jouve, 75001 PARIS (FR)

EP 1 391 709 A2

## Beschreibung

Stand der Technik

Die Erfindung geht aus von einer Vorrichtung bzw. von einem Drucksensor gemäß den Oberbegriffen der nebengeordneten Ansprüche. Es sind derzeit Drucksensoren bzw. Kraftsensoren bekannt, bei denen ein Stempel vorgesehen ist, der auf einen sensierenden Bereich drückt, wobei der Stempel dazu dient, eine Kraftübertragung herbeizuführen zwischen einem temperaturmäßig hochbelasteten Bereich, für welchen das Sensorelement nicht geeignet ist und einem Bereich mit geringeren Temperaturanforderungen, wo das Sensorelement untergebracht werden kann.

Vorteile der Erfindung

Die erfindungsgemäße Vorrichtung und der erfindungsgemäße Drucksensor gemäß den nebengeordneten Ansprüchen haben demgegenüber den Vorteil, dass kein Stempel notwendig ist, sondern das Sensorelement direkt in räumlicher Nähe zum temperaturmäßig hochbelasteten Bereich befindlich ist, wobei für den sensierenden Bereich des Sensorelements ein Ausgleich hinsichtlich der temperaturinduzierten Ausdehnung vorgesehen ist. Dadurch ist es möglich, zum einen das Sensorelement der erfindungsgemäßen Vorrichtung kleiner zu gestalten und damit insgesamt die erfindungsgemäße Vorrichtung kleiner und kostengünstiger zu gestalten. Weiterhin ist es auch möglich, ein genaueres Messergebnis der Messung zu erzielen, weil hinsichtlich des sensierenden Bereichs des Sensorelements die temperaturinduzierte Ausdehnung ausgeglichen ist. Die Möglichkeit zur Bestimmung des Brennraumdruckes im normalen Fahrbetrieb eröffnet neue Möglichkeiten des Motormanagements. Von Motormanagementsystemen auf Basis des Brennraumdruckes werden vielfältige Nutzeffekte erwartet, beispielsweise die Reduzierung von Emissionen und Geräuschpegel, insbesondere beim Dieselmotor. Zudem ist eine Online-Diagnose des Motors auch zur Erkennung und Vermeidung von Motorfehlern wünschenswert. Aufgrund der extremen Bedingungen im Brennraum kommen herkömmliche, in Serie produzierte Hoch-Drucksensoren an ihre physikalischen Grenzen. Im Brennraum herrschen Temperaturen von über 1000° C, welche durch eine thermische Ankopplung an die Zylinderwand auf unter 350° C an der Sensorspitze reduziert werden können. Aufgrund der räumlichen Enge am Zylinderkopf moderner Vierventilmotoren ist auch die Baugröße des Sensors stark limitiert. So soll der Kopf des Sensors bereits beim Zweiventilmotor einen Durchmesser von maximal 4 mm über eine Baulänge von mindestens 20 mm aufweisen. Bei einem Vierventilmotor sind bis zu 100 mm Länge und mehr in der Diskussion. Die Baulänge sollte daher aufgrund der geforderten Variantenvielfalt beliebig zu wählen sein. Der zu detektierende Druckbereich liegt im Fall eines Dieselmotors bei maximal 200 bar plus ca. 100 bar Sicherheitsreserve für den Berstdruck. Weiter wirken am Zylinderkopf Querbeschleunigungen bis 30 g. Aus Zuverlässigkeitsgründen wird gefordert, dass der Sensor bis zu 30.000 Temperaturwechsel von - 40° C bis 300° C ohne Degradation oder gar Ausfall übersteht. Zur optimalen Nutzung des Potenzials eines solchen Sensors wird zudem eine dynamische Auflösung bis 20 kHz gefordert.

Bei Temperaturen bis 250° C ist der Einsatz möglicher elektronischer Wandlerprinzipien (piezoelektrisch, piezoresistiv und so weiter) stark eingeschränkt. Insbesondere die konventionelle Elektronik auf Siliziumbasis kann nicht mehr eingesetzt werden, da diese nur bis maximal 150° C sinnvoll arbeitet. Die Verwendung von Polysilizium-Dehnmessstreifen oder herkömmlichen in Silizium diffundierten Piezowiderständen ist daher nicht möglich. Die Größenbeschränkung und die erzielbaren vergleichsweise geringen Signale verhindern den Einsatz von Metall-Dünnschicht-Sensorelementen. Weiterhin ist es in der Praxis nicht möglich, einen Brennraumdrucksensor derart vorzusehen, dass ein Stempel vorgesehen ist, der den Hub einer Membran im oder am Brennraum auf einen mikromechanischen Drucksensor im kühleren Bereich überträgt und so die mechanisch-elektrische Signalwandlung aus dem heißen Bereich am Rand des Brennraums in den kühleren Bereich heraus verlegt, weil aufgrund der notwendigen Dynamik von 20 kHz grundsätzlich mit einer Limitierung der Stempellänge und damit der gesamten Geometrie zu rechnen ist. Konkret bedeutet dies beispielsweise, dass sich die geforderte Geometrie mit einem Durchmesser von kleiner als 4 mm über mehr als 25 mm Baulänge nicht realisieren lässt, da bereits bei etwa 5 kHz Biegeschwingungen in einem solchen Stempel und im Gehäuse auftreten. Die erfindungsgemäße Vorrichtung zur Messung einer Kraft und zur Messung eines Drucks bzw. der Drucksensor haben daher den Vorteil, eine elektronische Lösung für das Problem der Brennraumdrucksensorik bereitzustellen, wobei die erfindungsgemäße Vorrichtung auf kleinstem Raum bereitgestellt werden kann. Durch eine Signalwandlung direkt an bzw. relativ nahe an der Brennraummembran soll die geometrische Beschränkung bei Verwendung eines Koppelgliedes umgangen werden, wodurch die geforderte Variantenvielfalt ermöglicht wird.

Durch die Verwendung von SOI-Material (Silicon on Insulator) wird die Forderung einer Temperaturbeständigkeit bis über 350° C hinaus erfüllt. Dies hat den Vorteil, dass das Sensorelement vergleichsweise nahe an die Zone des zu messenden Drucks herangeführt werden kann, sodass die Vorrichtung mit weniger Fehlern durch die Übertragung des Druckes von dem Brennraum auf das Sensorelement behaftet ist. SOI-Material hat weiterhin den Vorteil, dass die Dehnwiderstände, welche die Auslenkung des Sensorelements messen sollen, durch eine echte Isolationsschicht voneinander getrennt sind. Herkömmliche Dehnwiderstände aus Silizium werden dagegen mittels einer P-N-Wanne hergestellt. Bei dieser Technik fließen bereits bei Temperaturen von über 150° C Leckströme zwischen den Dehnwiderständen. SOI-Dehnelemente sind dagegen für Temperaturen bis über 350° C geeignet. Durch die Verwendung von Silicon Carbide on Insulator als Substratmaterial bzw. als Material des Sensorelementes ist es sogar möglich, das Sensorelement bis zu Temperaturen von ca. 500°C thermisch zu belasten.

Die Aufbautechnik ist für den Einsatz eines solchen Sensorelementes von großer Bedeutung. Sie muss einerseits den Anforderungen an die Baugröße genügen, andererseits genügend thermische Sicherheit des Sensorelements gewährleisten sowie Möglichkeiten zur Montage und Fertigung des Sensorelements bieten. Hinzu kommen die Forderungen an die Dynamik und Variantenvielfalt, beispielsweise die Längen des Sensorkopfes von über 10 mm bei maximal 3 bis 4 mm Durchmesser.

Weiterhin ist es von Vorteil, dass das Sensorelement eine erste Ausdehnungsstrecke aufweist, dass das Trägerelement eine zweite Ausdehnungsstrecke aufweist und dass das Verpackungselement eine vierte Ausdehnungsstrecke aufweist, wobei in einem vorgegebenen Temperaturbereich temperaturunabhängig die Summe aus erster und zweiter Ausdehnungsstrecke im Wesentlichen gleich der vierten Ausdehnungsstrecke vorgesehen ist. Hierdurch wird der erfindungsgemäße Ausgleich der temperaturinduzierten Ausdehnung relativ zum sensierenden Bereich in besonders einfacher Weise durchgeführt.

Weiterhin ist von Vorteil, dass das Verpackungselement als Hüllrohr oder als Stahlmantelleitung bzw. als Metallmantelleitung vorgesehen ist. Dadurch ist es möglich, die erfindungsgemäße Vorrichtung bzw. den erfindungsgemäßen Sensor besonders kostengünstig herzustellen und, insbesondere bei der Verwendung eines Hüllrohres, eine thermische Ankopplung des Hüllrohres an die Zylinderwand und damit eine Absenkung der Temperatur auf unter 300° C zu bewirken. Die Verwendung einer Stahlmantelleitung als Zuleitung hat den Vorteil, dass es sich hierbei um ein Standardbauteil handelt, wie es beispielsweise auch bei vielen anderen Sensoren Verwendung findet.

Zeichnung

Ausführungsbeispiele der Erfindung sind in der Zeichnung dargestellt und in der nachfolgenden Beschreibung näher erläutert.

Es zeigen

Figur 1 eine erfindungsgemäße Vorrichtung in einem Montagestadium,
Figur 2 eine erfindungsgemäße Vorrichtung in Seitendarstellung und in einer Schnittdarstellung,
Figur 3 eine erfindungsgemäße Vorrichtung in einer vergrößerten Darstellung,
Figur 4 eine detailliertere Darstellung des prinzipiellen Aufbaus einer ersten Ausführungsform der erfindungsgemäßen Vorrichtung,
Figur 5 eine Prinzipskizze zur Ausdehnungskompensation,
Figur 6 eine zweite Ausführungsform der erfindungsgemäßen Vorrichtung und
Figur 7 eine dritte Ausführungsform der erfindungsgemäßen Vorrichtung.

Beschreibung der Ausführungsbeispiele

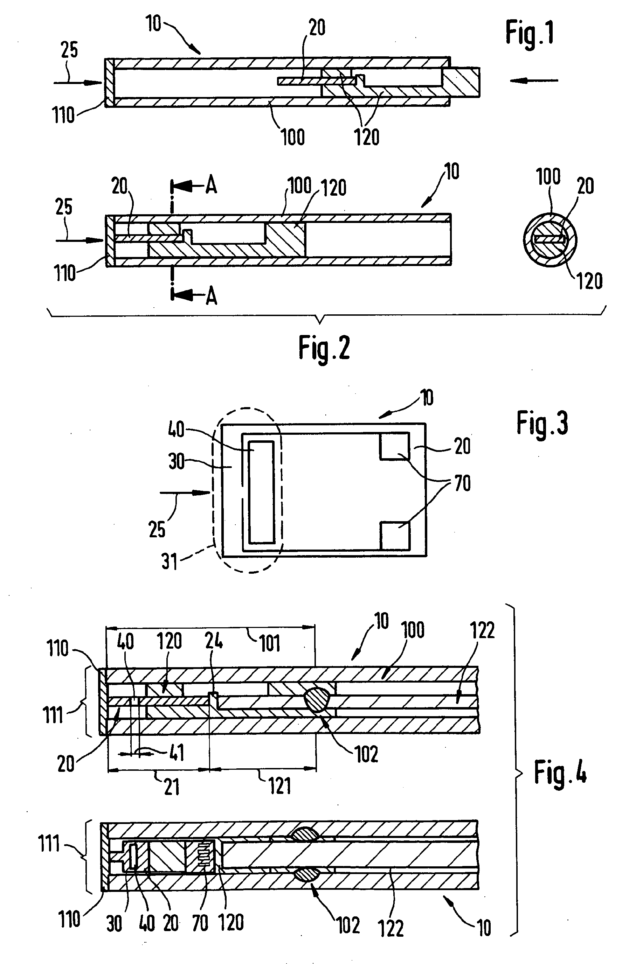

In Figur 1 ist eine erfindungsgemäße Vorrichtung zur Messung einer Kraft bzw. zur Messung eines Druckes dargestellt und mit dem Bezugszeichen 10 versehen. Die Vorrichtung umfasst ein Substrat 20, worauf sich der in Figur 1 nicht dargestellte sensierende Bereich 31 befindet. Weiterhin ist in Figur 1 ein Trägerelement 120 dargestellt, worauf das Substrat 20 fixiert ist. Das Substrat 20 ist zusammen mit dem Trägerelement 120 in einem Verpackungselement 100 vorgesehen und wird zur Montage der erfindungsgemäßen Vorrichtung 10 im Verpackungselement 100 gemäß der im rechten Teil der Figur 1 mittels eines Pfeils angedeuteten Richtung verschoben. Weiterhin ist in Figur 1 eine Membran 110 dargestellt, die erfindungsgemäß mit dem Verpackungselement 110 entweder mittels einer Fügetechnik, beispielsweise Schweißen, verbunden ist oder einstückig mit dem Verpackungselement 100 verbunden ist. Im linken Teil der Figur 1 ist weiterhin ein mit dem Bezugszeichen 25 versehener Pfeil vorgesehen, der die Kraftrichtung der mittels der Vorrichtung 10 zu ermittelnden Kraft angibt.

In Figur 2 ist die erfindungsgemäße Vorrichtung 10 dargestellt, wobei das Substrat 20 zusammen mit dem Trägerelement 120 in seine endgültige Position im Verpackungselement 100 gebracht ist. Hierbei stößt das Substrat 20 an die Membran 110 an. Eine Kraftwirkung in Richtung des in Figur 2 ebenfalls mit dem Bezugszeichen 25 versehenen Pfeils bewirkt eine Verbiegung der Membran 110, welche auf das Substrat 20 übertragen wird. Eine solche Verbiegung kann mit der erfindungsgemäßen Vorrichtung 10 ermittelt werden, und somit die Kraft auf die Membran 110 bestimmt werden. Somit kann auch eine Druckkraft auf die Membran 110 bestimmt werden, woraus die Druckkraft auf die Fläche der Membran 110 und somit der Druck zugänglich ist. Im rechten Teil der Figur 2 ist eine Querschnittsdarstellung der erfindungsgemäßen Vorrichtung 10 entlang der Schnittlinie AA dargestellt.

In Figur 3 ist in einer vergrößerten Detaildarstellung im Wesentlichen das Substrat 20 der erfindungsgemäßen Vorrichtung 10 dargestellt. Das Substrat 20 weist erfindungsgemäß einen sensierenden Bereich 31 auf, der in eingebautem Zustand der Vorrichtung 10 zu der Membran 110 hin ausgerichtet ist, wobei die Membran 110 jedoch in Figur 3 nicht dargestellt ist. Dargestellt ist in Figur 3 jedoch die Richtung 25 der Kraftwirkung, auf die der sensierende Bereich 31 des Substrats 20 bzw. der Vorrichtung 10 sensibel ist. Beispielhaft ist der sensierende Bereich 31 derart realisiert, dass eine Mikrobalkenstruktur durch die Kraftwirkung verbogen wird. Hierzu weist das Substrat 20 beispielhaft einen Mikrobalken 30 als Spannungsbereich 30 auf und eine Abschwächungszone 40, die beispielsweise als Ausnehmung oder Durchbruch 40 im Substrat 20 angeordnet ist. Dadurch, dass die Ausnehmung 40 oder, allgemeiner gesagt, die Abschwächungszone 40 in Richtung der Kraftwirkung hinter dem Mikrobiegebalken 30 vorgesehen ist, hat eine Kraftwirkung auf den Spannungsbereich 30 die Wirkung, dass dieser verbogen wird. Dies wird mittels in Figur 3 nicht dargestellter, im Bereich des Spannungsbereichs 30 angebrachter Messelemente wie beispielsweise Piezowiderstände oder Dehnmessstreifen erfasst. Die Signale der Messelemente werden zu Anschlussflächen 70 weitergeleitet, wobei die Weiterleitung insbesondere über Leiterbahnen erfolgt, die in Form von Metallisierungen auf dem Substrat 20 angebracht sind. Die Kontaktflächen 70 sind ebenfalls in einer vorteilhaften Ausführungsform als Metallisierungen auf dem Substrat 20 ausgeführt.

In Figur 4 ist eine detailliertere Darstellung der erfindungsgemäßen Vorrichtung 10 gemäß eines ersten Ausführungsbeispiels dargestellt. Das Substrat 20 ist wiederum auf dem Trägerelement 120 befestigt im Verpackungselement 100 vorgesehen. Weiterhin ist ein Anschlusselement 122 vorgesehen, welches die elektrische Verbindung zur Außenwelt der erfindungsgemäßen Vorrichtung 10 übernimmt. Mit dem Verpackungselement 100 verbunden ist wiederum die Membran 110, welche die Membranfläche 111 aufweist. Über die Definition der Membranfläche 111 ist es durch Messung der Kraft auf die Membran 110 somit möglich, die Druckkraft und somit den Druck auf die Membran 110 zu messen. Weiterhin ist in Figur 4 eine Anschlussfläche auf dem Substrat 20 mit dem Bezugszeichen 70 bezeichnet. Erkennbar ist weiterhin in Figur 4 der Spannungsbereich 30 und die Ausnehmung 40 im Substrat 20. Im oberen Teil der Figur 4 ist die Vorrichtung 10 in einer Seitendarstellung dargestellt, wobei das Substrat 20 von der Seite betrachtet wird, d.h. die Zeichenebene steht senkrecht auf der Hauptsubstratebene des Substrats 20. Im unteren Teil der Figur ist eine um 90 Grad gedrehte Darstellung gewählt, sodass die erfindungsgemäße Vorrichtung 10 aus einer Richtung von oben auf das Substrat 20 einsehbar ist und die Zeichenebene der Hauptsubstratebene entspricht.

Durch die Verwendung von Silicon on Insulator als Grundlage insbesondere für das Substrat 20 der Vorrichtung 10 kann die Funktionalität einer elektronischen Struktur bis zu Temperaturen oberhalb von 350° C gewährleistet werden. Die mechanisch-elektrische Signalwandlung kann damit direkt an der Membran 110 bzw. der als Teil eines Drucksensors im Brennraum einer Verbrennungskraftmaschine angeordneten Brennraummembran 110, d.h. bei Temperaturen um etwa 300°C, erfolgen. Auf eine mechanische Kraftkopplung über weite Strecken, beispielsweise durch einen Stempel, kann verzichtet werden.

Erfindungsgemäß ist es insbesondere vorteilhaft, das sensierende Substrat 20 bzw. den sensierenden Bereich 31 des Substrates 20 stehend in dem beispielsweise als Rohr ausgebildeten Verpackungselement 100 vorzusehen, wodurch eine Dimension des Sensorkopfes von 3 mm Durchmesser oder sogar weniger erreichbar ist. Weiterhin ist es dadurch möglich, die Zuleitungsführung über fast beliebige Längen, abhängig jedoch von der Höhe des Sensorsignals, zu führen und damit die Möglichkeit zur Verlagerung der Ausschalteschaltung in kühlere Regionen zu erhalten. Dies vergrößert die mögliche Variantenvielfalt. Eine derartige stehende Einbauweise des Substrates 20 in Bezug auf die Membran 110 gewährleistet eine Aufbau- und Verbindungstechnik, bei der der Sensor bzw. die Vorrichtung 10 auf einfache Weise und unter Verwendung bekannter Technologien kontaktiert werden kann. Damit wird es möglich, zur thermischen Kompensation der Differenz der Längenausdehnung des Verpackungselementes 100 einerseits und des Substrats 20 und dessen Trägerelement 120 andererseits und damit zum Ausgleich des Temperaturganges des Sensors bzw. der Vorrichtung 10 durch Verwendung geeigneter Materialkombinationen beizutragen. Eine Variante hiervon ist nachfolgend im dritten Ausführungsbeispiel beschrieben. Die erfindungsgemäß vorgeschlagene Möglichkeit zur thermischen Kompensation der Längenausdehnung lässt es jedoch weiterhin offen bzw. wünschenswert erscheinen, eine mechanische Kompensation des Temperaturganges, beispielsweise durch eine Sicke in der Membran 110, vorzusehen. Der erfindungsgemäße Aufbau der Vorrichtung 10 durch Einschieben des Substrates 20 mit seinem Trägerelement 120 in das Verpackungselement 100 erlaubt es, eine besonders fertigungsfreundliche Montage der erfindungsgemäßen Vorrichtung 10 mit der Möglichkeit zum Vorspannen des sensierenden Bereichs 31 des Substrats 20 vorzusehen. Erfindungsgemäß ist es insbesondere vorgesehen, als Anschlusselement 122 eine Keramikplatte vorzusehen, welche insbesondere als Träger für die in der Figur 4 nicht explizit mit einem Bezugszeichen bezeichneten Zuleitungen vorzusehen. Dadurch sind für die Zuleitungen wenige Bauteile notwendig und die Zuleitungen können auf die Keramikplatte gedruckt werden. Weiterhin ist es dadurch möglich, die Ausschalteschaltung in Hybridtechnik auf den Zuleitungsträger bzw. auf das Anschlussoder auch Kontaktelement 122 zu montieren. Die Verbindung des Substrats 20 mit dem Trägerelement 120 kann erfindungsgemäß auf vielfältige Weise erfolgen, beispielsweise durch Klemmen des Substrates 20 auf ein als Chipträger 120 ausgebildetes Trägerelement 120. Damit können thermische Spannungen zwischen Trägerelement 120 und Chip 20 bzw. Substrat 20 vermieden werden. Der Chip 20 bzw. das Substrat 20 wird durch die Vorspannung zwischen der Membran 110 und einem auf dem Chipträger 120 vorgesehenen Anschlag, der in Figur 4 mit dem Bezugszeichen 24 bezeichnet ist, gehalten. Das Substrat 20 ist mit dem Trägerelement 120, welches auch als Chipträger 120 bezeichnet wird, erfindungsgemäß verbunden, beispielsweise durch Aufglasen mit einem Sealglas mit möglichst niedrigem thermischem Ausdehnungskoeffizienten oder auch durch eine reine Klemmverbindung befestigt. Das Substrat 20 bzw. der Chip 20 wird dabei von vorne in den Chipträger 120 eingeschoben und durch diesen beispielsweise nur leicht gehalten. Die eigentliche feste Montage erfolgt in diesem Beispiel dann erst durch das Anpressen des Substrates 20 auf die Membran 110, wodurch das Substrat 120 festgeklemmt und gleichzeitig vorgespannt wird. Ein solcher Einbau hat den Vorteil, dass thermische Inkompatibilitäten, insbesondere hinsichtlich der Ausdehnungskoeffizienten von Chipträger 120, welcher erfindungsgemäß insbesondere aus Stahl vorgesehen ist, und Substrat 20 bzw. Chip 20, welches aus Silizium bzw. aus einem SOI-Material vorgesehen ist, nicht zu mechanischen Spannungen an deren Verbindung führen. Der Chipträger 120 hat beispielsweise einen thermischen Ausdehnungskoeffizienten von $10 * 10^{-6}$ 1/K und das Substrat 20 hat einen thermischen Ausdehnungskoeffizienten von $2 * 10^{-6}$ 1/K. Nach dem Einschieben des Chips 20 bis an den vorgegebenen Anschlag 24 des Chipträgers 120 kann das Anschlusselement 122 mit den Zuleitungen angebracht werden. Hierbei kann es sich bei dem Anschlusselement 122 beispielsweise um eine Keramikplatte als Hybrid mit aufgedruckten Zuleitungen handeln. Dieses Anschlusselement 122 führt das Signal entweder bis zur weiter hinten, in kühleren Bereichen befindlichen und in Figur 4 nicht dargestellten Auswerteschaltung oder bei einer bereits auf dem Substrat 20 integrierten Auswerteschaltung direkt zum Stecker. Im Falle einer Keramikplatte als Anschlusselement 122 kann das beispielsweise als ASIC (Application Specific Integrated Circuit) vorgesehene Substrat 20 mit der Auswerteschaltung direkt auf das Anschlusselement 122 montiert werden, welches weiter hinten in der Vorrichtung 10 beispielsweise auch breiter werden darf. Nach der Montage des Anschlusselementes 122 mit den Zuleitungen kann die elektrische Verbindung des Substrats 20 bzw. der Kontaktflächen 70 auf dem Substrat 20 und den Zuleitungen im Anschlusselement 122 erfolgen. Dies geschieht erfindungsgemäß insbesondere durch Wire-Bonding von den Anschlussflächen 70 bzw. Kontaktpads 70 des Substrats 20 auf entsprechende Anschlussflächen auf dem Anschlusselement 122, die in Figur 4 nicht explizit dargestellt sind, oder aber auch durch Schweißen.

Das fertig kontaktierte und montierte Substrat 20 zusammen mit dem Chipträger 120 und dem Anschlusselement 122 kann dann von hinten in das Verpackungselement 100 bis zur Membran 110 eingeschoben werden. Dieser Vorgang ist auch in Figur 1 dargestellt. Der Chipträger 120 ist so geformt, dass er gleichzeitig als Führung des gesamten Gebildes im beispielsweise als Hüllrohr vorgesehenen Verpackungselement 100 dient. Dies kann beispielsweise durch eine runde Ausführung im Querschnitt, vergleiche den rechten Teil der Figur 2, geschehen. Hierdurch ist gewährleistet, dass das Trägerelement 120 als Führung im Verpackungselement 100 dienen kann, weil der Querschnitt des Trägerelements an das Innere des Verpackungselements 100 angepasst ist. Anschließend an das Einschieben wird das Substrat 20 vorgespannt. Dieser Vorgang kann erfindungsgemäß insbesondere elektronisch durch Messung des Ausgangssignals am fertig kontaktierten Sensorelement "online" überwacht werden. Das vorgespannte Substrat 20 wird dann bei durchgängiger Einwirkung der Vorspannung, beispielsweise mittels eines Laserschweißpunktes zwischen dem Chipträger 120 und dem Hüllrohr 100, fixiert. Erfindungsgemäß ist das beispielsweise als Hüllrohr 100 vorgesehene Verpackungselement 100 so dünn, dass eine solche Punktschweißung bzw. auch eine Linienschweißung funktioniert. Die Punktschweißung ist in Figur 4 mit dem Bezugszeichen 102 dargestellt. Sie erfolgt in einem Abstand 101 von der inneren Anschlagfläche der Membran 110, wobei der Abstand 101 auch als vierte Strecke 101 bezeichnet wird. Dadurch wird für unterschiedliche Temperatursituationen der erfindungsgemäßen Vorrichtung 10 das Ausdehnungsverhalten bei Erwärmung definiert. Durch die vierte Strecke 101 und die Wahl des Materials des Verpackungselementes 100 wird die für den sensierenden Bereich 31 des Substrates 20 relevante Wärmeausdehnung des Verpackungselementes 100 definiert, weil im Inneren des Verpackungselementes 100 die Ausdehnung ebenfalls zwischen dem inneren Anschlag der Membran 110 und der Schweißung 102 im Abstand 101 von der Sensormembran 110 erfolgt. Vereinfachend kann man zunächst von einem konstanten thermischen Ausdehnungskoeffizienten im betrachteten Temperaturbereich zwischen etwa $-40°$ C und $+350°$ C ausgehen. Dies bedeutet, dass im Inneren des Verpackungselementes die Längenänderung des Substrats 20 mit dem Ausdehnungskoeffizienten des Substrats 20 auf einer Distanz der Strecke zwischen dem Inneren der Membran 110 und dem Anschlag 24 am Chipträger 120 erfolgt. Diese relevante Länge des Chips 20 wird im folgenden auch als erste Strecke bezeichnet und ist in Figur 4 mit dem Bezugszeichen 21 versehen. Im restlichen Bereich der vierten Strecke 101 ist die Ausdehnung des Chipträgers 120 relevant. Diese zweite Strecke ist mit dem Bezugszeichen 121 bezeichnet. Erfindungsgemäß soll die Kraftwirkung auf den sensierenden Bereich 31 des Substrats 20 nur von der Kraft auf die Membran 110 abhängen und nicht durch unterschiedliche Längenausdehnungen, die durch die Temperatur der Anordnung induziert sind, herrühren. Eine geringere Wärmeausdehnung im Inneren des Verpackungselementes 100 würde bei Erwärmung zwangsläufig eine geringer Kraftwirkung auf das Sensorelement 20 bzw. das Substrat 20 simulieren.

Insofern ist es erfindungsgemäß vorgesehen, die Längenausdehnungen, die durch Temperatureinwirkung hervorgerufen werden, relativ zum sensierenden Bereich 31 des Substrats 20 weitgehend konstant zu halten. Dies geschieht erfindungsgemäß insbesondere durch die geeignete Wahl der Materialien des Substrats 20, des Chipträgers 120 und des Verpackungselementes 100 und durch die geeignete Wahl der Strecken 110, 21 und 121. Bei ausgeglichener Temperatursituation auf einem bestimmten Temperaturniveau ist es erfindungsgemäß daher beispielsweise vorgesehen, dass die zu vergleichenden Längen, d.h. einerseits die Länge 101 und andererseits die Summe der Längen 21 und 121 unabhängig von der Temperatur gleich sind. Dies bedeutet, dass die absoluten temperaturinduzierten Längenänderungen der betrachteten Strecken gleich sind. Diese Längenänderungen, die im folgenden auch als Ausdehnungsstrecken bezeichnet werden, ergeben sich für jede der Strecke 21, 121, 101 aus dem Produkt der Temperaturdifferenz zu einer gegebenen Bezugstemperatur, dem Ausdehnungskoeffizienten $\alpha$, der spezifisch ist für das gewählte Material und der Länge der Strecke bei der Bezugs- oder Referenztemperatur. Die erste Ausdehnungsstrecke ist die temperaturinduzierte Ausdehnung der ersten Strecke 21. Die zweite Ausdehnungsstrecke ist die temperaturinduzierte Ausdehnung der zweiten Strecke 121. Die vierte Ausdehnungsstrecke ist die temperaturinduzierte Ausdehnung der vierten Strecke 101. Die vierte Ausdehnungsstrecke sollte daher der Summe der ersten Ausdehnungsstrecke und der zweiten Ausdehnungsstrecke entsprechen, sodass sich die Gleichung

$$\Delta T * \alpha_{100} * x_{100} = \Delta T * \alpha_{20} * x_{20} + \Delta T * \alpha_{120} * x_{120}$$

ergibt.

Mit der weiteren Bedingung, wonach $x_{100}$ der Summe aus $x_{20}$ und $x_{120}$ entspricht, ergibt sich aus den bekannten Ausdehnungskoeffizienten $\alpha$ für die jeweiligen Materialien eine Bedingung für das Verhältnis der Strecken $x_{100}$ zu $x_{120}$. Dieses Verhältnis muss für ausgeglichene Temperaturverhältnisse über jeweils die gesamten relevanten Strecken auf $\frac{\alpha_{20} - \alpha_{120}}{\alpha_{100} - \alpha_{120}}$ lauten.

Hierbei entspricht $x_{100}$ der relevanten Strecke im Verpackungselement 100, d.h. der vierten Strecke 101 bei der Bezugstemperatur. Weiterhin entspricht $x_{20}$ der relevanten Strecke im Substrat 20, d.h. der ersten Strecke 21 bei der Bezugstemperatur. Weiterhin entspricht $x_{120}$ der relevanten Strecke im Substratträger 120, d.h. der zweiten Strecke 121 bei der Bezugstemperatur. Aus der Länge der vierten Strecke 101 und damit ihrem Verhältnis zur zweiten Strecke 121 bzw. aus dem Ort der Schweißung 102 kann somit bei ausgeglichenen Temperaturverhältnissen erreicht werden, dass die temperaturinduzierte Ausdehnung des Substrats 20, des Verpackungselements 100 und des Chipträgers 120 relativ zum sensierenden Bereich 31 des Substrats 20 bzw. des Sensorelements 20 im Wesentlichen ausgeglichen ist. Bei der Zugrundelegung eines nicht ausgeglichenen Temperaturverlaufs über die gesamten relevanten Strecken 101, 21, 121 ist es erfindungsgemäß ebenso möglich, einen Ausgleich der temperaturinduzierten Ausdehnung der Elemente 20, 120, 100 durch die Wahl eines anderen als dem genannten, für ausgeglichene Temperatur maßgebenden Streckenverhältnis zu bewirken.

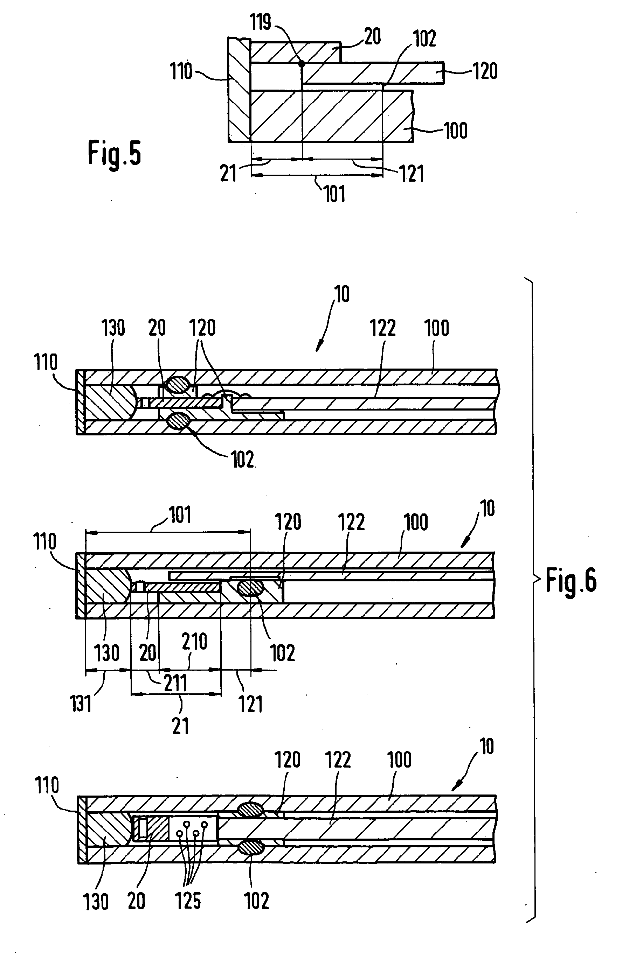

Wird der Chipträger 120 im Abstand der vierten Strecke 101 mit dem Gehäuse 100 verbunden, führen somit bei ausgeglichenen Temperaturverhältnissen temperaturbedingte Differenzen in den Längenänderungen der unterschiedlichen Materialien nicht zu einer Auslenkung des sensierenden Bereichs 31 des Substrates 20. Der Aufbau ist somit thermisch kompensiert. Diese thermische Kompensation ist in Figur 5 nochmals schematisch mit vierten Strecke 101 des Verpackungselementes 100 zwischen der Innenfläche der Membran 110 und dem Schweißpunkt 102, mit der für die Ausdehnung des Substrates 20 relevanten ersten Strecke 21 und der für die Ausdehnung des Chipträgers 120 relevanten zweiten Strecke 121 dargestellt. Hierbei ist zwischen dem Substrat 20 und dem Chipträger 120 an der mit dem Bezugszeichen 119 bezeichneten Stelle eine Verbindung, beispielsweise mittels Schweißen oder Klemmen, hergestellt, so dass als relevante erste Strecke 21 des Substrats 20 nur die Strecke zwischen der Membran und der Verbindung an der mit dem Bezugszeichen 119 bezeichneten Stelle relevant ist. In Figur 4 ist demgegenüber, wegen des dortigen Anschlags 24, die gesamte Länge des Substrats 20 relevant.

In Figur 6 ist eine zweite Ausführungsform der erfindungsgemäßen Vorrichtung 10 dargestellt. Wiederum ist ein Substrat 20 auf einem Chipträger 120 in einem Verpackungselement 100 vorgesehen, wobei ein Anschlusselement 122 zum Anschluss nach außen hin vorgesehen ist. Das Verpackungselement 100 umfasst an seinem einen Ende die Membran 110. Zur Kompensation der temperaturinduzierten Längenausdehnung des Verpackungselements 100 ist jetzt im Inneren des Verpackungselements 100 zusätzlich noch ein Kompensationselement 130 vorgesehen, welches zwischen der Membran 110 und dem Substrat 20 vorgesehen ist.

Im oberen Teil der Figur 6 ist eine bis auf das Kompensationselement 130 dem Aufbau in Figur 4 entsprechender Aufbau dargestellt, wo der Chip 20 auf dem Chipträger 120 aufgebracht ist und zum Kontaktelement 122 insbesondere mittels Wire-Bonding kontaktiert ist. Als zusätzlich zu berücksichtigende temperaturinduzierte Längenänderung im Inneren des Verpackungselements 100 ist daher noch die der dritten Ausdehnungsstrecke entsprechende Längenänderung des Kompensationselements 130 zu berücksichtigen. Die dritte Längenänderung ergibt sich aus der mit dem Bezugzeichen versehenen dritten Strecke, d.h. der relevanten Ausdehnung des Kompensationselementes 130, multipliziert mit der Temperaturdifferenz und dem Ausdehnungskoeffizienten. Durch die Berücksichtigung auch der Ausdehnung des Kompensationselementes 130 ist es möglich, durch die geeignete Wahl des Materials des Kompensationselements 130 die Kompensation der jeweiligen Längenänderungen durch eine Temperaturänderung für den sensierenden Bereich 31 des Substrates 20 zu bewirken.

Im mittleren und unteren Teil der Figur 6 ist ein Aufbau mittels Flip-Chip-Kontaktierung des Substrats 20 mit dem Kontaktelement 122 dargestellt. Die Flip-Chip-Kontaktierungspunkte sind in Figur 6 im unteren Teil der Figur mit dem Bezugszeichen 125 versehen. Im unteren Teil der Figur 6 ist eine Draufsicht auf das Substrat 20 dargestellt und im mittleren Teil der Figur 6 eine Darstellung unter entsprechender Drehung um 90 Grad gewählt, sodass das Substrat 20 von der Seite gesehen wird. Im mittleren Teil der Figur 6 sind die für die temperaturinduzierte Längenänderung durch Temperaturinduzierung maßgeblichen Strecken dargestellt: Die vierte Strecke 101 entspricht wieder der relevanten Streckenlänge des Verpackungselementes 100, die dritte Strecke 131 entspricht der relevanten Ausdehnungsstrecke des Kompensationselementes 130 und die erste Strecke 21 gliedert sich in eine erste Teilstrecke 211 und eine zweite Teilstrecke 210 auf. Die zweite Strecke 121, bei der die Längenausdehnung des Chipträgers 120 relevant ist, ist im mittleren Teil der Figur 6 ebenfalls dargestellt. Insgesamt ist wiederum die der vierten Ausdehnungsstrecke entsprechende temperaturinduzierte Längenänderung der Strecke 101 mit der temperaturinduzierten Längenänderung der Summe der Strecken 131, 21 und 121, d.h. mit der Summe aus der ersten, der zweiten und der dritten Ausdehnungsstrecke, zu vergleichen. Die Aufgliederung der ersten Strecke 21 in die erste und zweite Teilstrecke 210, 211 rührt erfindungsgemäß insbesondere daher, dass das Material im Bereich der ersten Teilstrecke 211 einen anderen Temperaturausdehnungskoeffizienten aufweist als das Substratmaterial im Bereich der zweiten Teilstrecke 210. Dies kann beispielsweise daher rühren, dass im Bereich der zweiten Teilstrecke 210 außer dem Temperaturausdehnungskoeffizienten des Substratmaterials wegen seiner Verbindung in diesem Bereich mit dem Substratträger 120 auch noch der Temperaturausdehnungskoeffizient des Substratträgers 120 Einfluss auf die Wärmeausdehnung hat. Für diesen Fall müssen selbstverständlich die Teilstrecken 210, 211 separat betrachtet werden, wie in Figur 6 angedeutet.

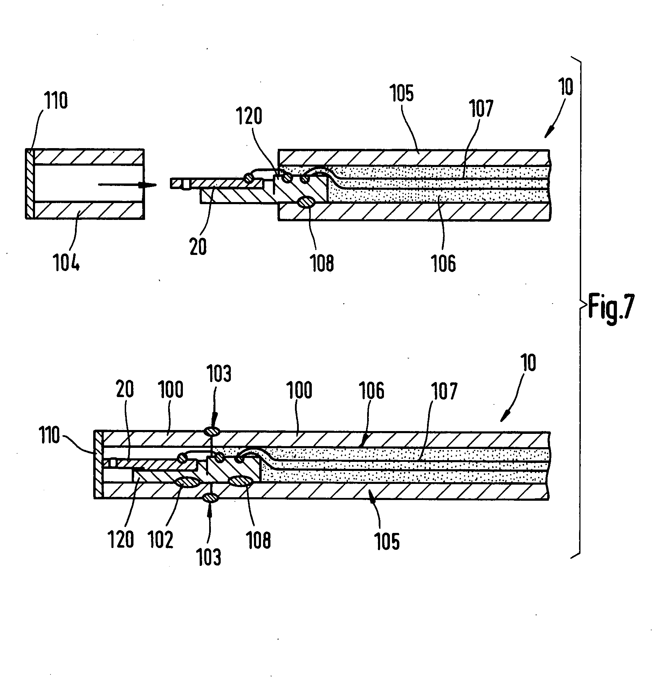

In Figur 7 ist ein drittes Ausführungsbeispiel der erfindungsgemäßen Vorrichtung 10 dargestellt. Hierbei ist das Verpackungselement 100 in Form eines ersten Teils 104 und eines zweiten Teils 105 vorgesehen. Am ersten Teil 104 des Verpackungselementes 100 ist die Sensormembran 110 vorgesehen. Das erste Teil 104 wird im folgenden auch als Verpackungskopf 104 bezeichnet. Der zweite Teil 105 des Verpackungselementes 100 ist im dritten Ausführungsbeispiel der erfindungsgemäßen Vorrichtung in Form einer Metallmantelleitung bzw. Stahlmantelleitung vorgesehen, welche in deren Innerem ein Keramikmaterial, insbesondere als Pulver, aufweist, welches mit dem Bezugszeichen 106 bezeichnet ist und welches weiterhin in seinem Inneren Metallleitungen aufweist, welche mit dem Bezugszeichen 107 bezeichnet sind. Weiterhin ist auch im dritten Ausführungsbeispiel der erfindungsgemäßen Vorrichtung das Substrat 20, der Chipträger 120 und der Schweißpunkt 102 bzw. die Schweißstelle 102 zwischen dem ersten Teil 104 des Verpackungselements 100 und dem Chipträger 120 dargestellt. Das Substrat 20 ist beispielsweise mittels Wire-Bonding oder auch mittels direktem Verschweißen mit dem Chipträger 120 verbunden und dieser wiederum mittels einer geeigneten Kontaktierungstechnik mit den Metallleitungen 107 in der Metallmantelleitung verbunden. Das Substrat 20 kann jedoch erfindungsgemäß auch direkt mit den Metallleitungen 107 in der genannten Weise kontaktiert werden. Zur Montage wird das Substrat 20 mitsamt seinem Chipträger 120 in den zweiten Teil 105 des Verpackungselementes 100 eingebaut und beispielsweise mittels eines Schweißpunktes 108 verbunden. Anschließend wird der erste Teil 104 des Verpackungselementes 100 auf den zweiten Teil 105 aufgesetzt und unter Bildung eines Schweißpunktes 103 bzw. einer Schweißstelle 103 unter einer Vorspannung mit dem zweiten Teil 105 des Verpackungselementes 100 verbunden. Hierdurch ist das Verpackungselement 100 als ein Verpackkungskopf 104 verbunden mit einer Stahlmantelleitung 105 vorgesehen. Anschließend wird zur erfindungsgemäßen Längenausdehnungskompensation noch der Schweißpunkt 102 zwischen den Verpackungselement 100 und dem Chipträger 120 gesetzt.

Für den Einsatz der erfindungsgemäßen Vorrichtung 10 in einer der Ausführungsbeispiele als Drucksensor und insbesondere als Brennraumdrucksensor einer Verbrennungskraftmaschine ist es hilfreich, für eine Entwärmung des Sensorkopfes, d.h. des vorderen Teils der Vorrichtung 10, zu sorgen. Dies kann beispielsweise über einen thermischen Kontakt mit dem Material des Zylinderkopfs unmittelbar in der Nähe der Membran 110 geschehen. Zum Betrieb in einem Temperaturbereich, der für das einwandfreie Funktionieren des Sensors geeignet ist, kann eine solche Entwärmung zwingend erforderlich sein. Hierzu wird beispielsweise eine Dichtfläche am Sensorkopf geschaffen, welche jedoch in den Figuren nicht gezeigt ist.

Das Kompensationselement 130 ist erfindungsgemäß insbesondere als, Stempel aus einem Material mit höherem Ausdehnungskoeffizienten vorgesehen. Die Stempellänge und der Fixierungspunkt muss erfindungsgemäß selbstverständlich geeignet gewählt werden.

**Patentansprüche**

1. Vorrichtung (10) zur Messung einer Kraft in einer vorgegebenen Richtung (25) mit einem Sensorelement (20), **dadurch gekennzeichnet, dass** das Sensorelement (20) mit einem Trägerelement (120) verbunden ist, wobei das Sensorelement (20) und das Trägerelement (120) von einem Verpackungselement (100) zumindest teilweise umgeben ist, wobei das Trägerelement (120) und das Verpackungselement (100) derart miteinander verbunden sind, dass in der vorgegebenen Richtung (25) die temperaturinduzierte Ausdehnung der Elemente (20, 100, 120) relativ zum sensierenden Bereich (31) des Sensorelements (20) im Wesentlichen ausgeglichen ist.

2. Vorrichtung (10) nach Anspruch 1, **dadurch gekennzeichnet, dass** die temperaturinduzierte Ausdehnung der Elemente (20, 100, 120) in der Weise ausgeglichen ist, dass das Sensorelement (20) eine erste Ausdehnungsstrecke aufweist, dass das Trägerelement (120) eine zweite Ausdehnungsstrecke aufweist und dass das Verpackungselement (100) eine vierte Ausdehnungsstrecke aufweist, wobei in einem vorgegebenen Temperaturbereich temperaturunabhängig die Summe aus erster und zweiter Ausdehnungsstrecke im Wesentlichen gleich der vierten Ausdehnungsstrecke vorgesehen ist.

3. Vorrichtung (10) nach Anspruch 1, **dadurch gekennzeichnet, dass** zusätzlich ein Kompensationselement (130) vorgesehen ist, wobei das Trägerelement (120) und das Verpackungselement (100) derart miteinander verbunden sind, dass in der vorgegebenen Richtung (25) die temperaturinduzierte Ausdehnung der Elemente (20, 100, 120, 130) für den sensierenden Bereich (31) des Sensorelements (20) im Wesentlichen ausgeglichen ist.

4. Vorrichtung (10) nach Anspruch 3, **dadurch gekennzeichnet, dass** die temperaturinduzierte Ausdehnung der Elemente (20, 100, 120, 130) in der Weise ausgeglichen ist, dass das Sensorelement (20) eine erste Ausdehnungsstrecke aufweist, dass das Trägerelement (120) eine zweite Ausdehnungsstrecke aufweist, dass das Kompensationselement (130) eine dritte Ausdehnungsstrecke und dass das Verpackungselement (100) eine vierte Ausdehnungsstrecke aufweist, wobei in einem vorgegebenen Temperaturbereich temperaturunabhängig die Summe aus erster, zweiter und dritter Ausdehnungsstrecke im Wesentlichen gleich der vierten Ausdehnungsstrecke vorgesehen ist.

5. Vorrichtung (10) nach einem der vorhergehenden Ansprüche, **dadurch gekennzeichnet, dass** das Verpackungselement (100) als Hüllrohr oder als Stahlmantelleitung vorgesehen ist.

6. Vorrichtung (10) nach einem der vorhergehenden Ansprüche, **dadurch gekennzeichnet, dass** die Vorrichtung eine Membran (110) umfasst, wobei in einem vorgegebenen Temperaturbereich temperaturunabhängig die Kraft der Membran (110) auf den sensierenden Bereich (31) im Wesentlichen gleich ist.

7. Vorrichtung (10) nach Anspruch 6, **dadurch gekennzeichnet, dass** die Membran (110) einstückig mit dem Verpackungselement (100) verbunden ist oder dass die Membran (110) mit dem Verpackungselement (100) mittels einer Fügetechnik verbunden ist.

8. Vorrichtung (10) nach einem der vorhergehenden Ansprüche, **dadurch gekennzeichnet, dass** das Trägerelement (120) und das Verpackungselement (100) mittels Schweißung, insbesondere mittels Laserschweißung, miteinander verbunden sind.

9. Vorrichtung (10) nach einem der vorhergehenden Ansprüche, **dadurch gekennzeichnet, dass** das Substratmaterial als Silicon on Insulator bzw. als Silicon Carbide on Insulator vorgesehen ist.

10. Vorrichtung (10) nach einem der vorhergehenden Ansprüche, **dadurch gekennzeichnet, dass** ein Anschlusselement (122) vorgesehen ist, wobei das Anschlusselement (122) mit dem Sensorelement (20) mittels Wire-Bonding und/oder mittels Flip-Chip-Kontaktierung direkt oder indirekt verbunden ist.

11. Vorrichtung (10) nach einem der vorhergehenden Ansprüche, **dadurch gekennzeichnet, dass** eine Stahlmantelleitung mit Metallleitungen (107) vorgesehen ist, wobei die Metallleitungen (107) mittels Verschweißen bzw. Bonden direkt mit dem Sensorelement (20) oder indirekt über das Trägerelement (120) mit dem Sensorelement (20) verbunden sind.

12. Vorrichtung (10) nach einem der vorhergehenden Ansprüche, **dadurch gekennzeichnet, dass** der Querschnitt des Trägerelements (120) derart vorgesehen ist, dass das Trägerelement (120) als Führung im Verpackungselement (100) dient.

13. Vorrichtung (10) nach einem der vorhergehenden Ansprüche, **dadurch gekennzeichnet, dass** als Verpackungselement (100) ein Verpackungskopf (104) verbunden mit einer Stahlmantelleitung (105) vorgesehen ist.

14. Vorrichtung (10) zur Messung eines Drucks mit einer Vorrichtung (10) zur Messung einer Kraft gemäß einem der vorhergehenden Ansprüche, **dadurch gekennzeichnet, dass** zur Messung des

**EP 1 391 709 A2**

Drucks die Messung einer Druckkraft auf eine Messfläche (111) herangezogen wird.

**15.** Drucksensor mit einer Vorrichtung (10) nach Anspruch 14.

Fig.1

Fig.2

Fig.3

Fig.4

Fig.5

Fig.6

Fig.7